# EUROPEAN PATENT SPECIFICATION

(11) **EP 2 657 308 B1**
(45) Date of publication and mention of the grant of the patent: **11.12.2013**
(21) Application number: 12165784.5
(22) Date of filing: 26.04.2012
(51) Int. Cl.: C09D 175/16, C09D 4/06, C09D 11/10

(54) **Aqueous radiation curable coating composition**
Wässrige strahlenhärtbare Beschichtungszusammensetzung
Composition de revêtement aqueuse durcissable par radiation

(43) Date of publication of application: 30.10.2013
(73) Proprietor: Actega Terra GmbH, 31275 Lehrte (DE)
(72) Inventor: Dikmans, Antonius, 30926 Seelze (DE); Segmüller, Thomas, 84508 Burgkirchen (DE); Kamphuis, Frank, 31535 Neustadt a. Rbg. (DE)
(74) Representative: Maiwald Patentanwalts GmbH

(56) References cited:
- WO-A1-2009/115489
- US-A1- 2006 229 412

## Description

The present application relates to aqueous radiation curable coating compositions for use in the graphic arts, the use of said coating composition, as well as to the products prepared using said coating composition.

In printing, such as sheet-fed offset printing, flexo printing, gravure printing, ink jet printing, screen printing, etc., several different systems of ink and overprint varnishes are available. Especially for high quality printing products, different ink systems may be used, such as UV curable inks, oil based inks, or water and other solvent based inks. Based on the ink system used for printing, a correspondingly matching overprint varnish may be chosen.

Two basic systems of overprint varnishes were developed for use in the graphic arts printing industry. On the one hand, water based varnishes or coatings are available. Such coatings are easy to use since the drying process does not require expensive or energy consuming equipment. Drying may simply be achieved by water removal with, e.g., a stream of hot or cold air. Such water based coatings are often used for coatings on oil based inks. However, a high gloss coating is difficult to achieve with a water based varnish.

On the other hand, if a UV curable coating is used to achieve a high gloss, the coating may be incompatible with the oil based ink, requiring first a coating with a water based primer. The use of several different coatings, however, may reduce scratch resistance, increase delamination of the coatings and have inter-coat adhesion problems. Furthermore, different coatings usually also require the use of different coating machines, increasing the cost and complexity of the coating process.

WO 2009/115489 discloses the use of a water-dilutable (meth)acrylated urethane and a water-dispersible (meth)acrylated urethane in the preparation of a water-based ink or overprint varnish.

It has now been found that a combination of an aqueous radiation curable polyurethane dispersion and an aqueous dispersion of a non radiation curable (meth)acrylic resin may be used in the preparation of an overprint varnish with improved properties.

According to a first aspect, the present invention is directed to a coating composition for use in the graphic arts comprising:
a) 30 to 95 % by wt., based on the total weight of the coating composition, of an aqueous radiation curable polyurethane dispersion;
b) 2 to 30 % by wt., based on the total weight of the coating composition, of an aqueous dispersion of a non radiation curable (meth)acrylic resin;
c) 0.1 to 5 % by wt., based on the total weight of the coating composition, of wax particles;
d) 1 to 10 % by wt., based on the total weight of the coating composition, of a wax emulsion;
e) 0.1 to 10 % by wt., based on the total weight of the coating composition, of a surfactant; and
f) a photoinitiator.

In a second aspect, the present invention is directed to the use of a coating composition according to the first aspect as an overprint varnish, as a primer or as a topcoat.

A third aspect of the present invention relates to a coated substrate obtained by coating a substrate with a coating composition according to the first aspect.

The coating composition of the first aspect of the present invention for use in graphic arts comprises:
a) 30 to 95 % by wt., based on the total weight of the coating composition, of an aqueous radiation curable polyurethane dispersion;
b) 2 to 30 % by wt., based on the total weight of the coating composition, of an aqueous dispersion of a non radiation curable (meth)acrylic resin;
c) 0.1 to 5 % by wt., based on the total weight of the coating composition, of wax particles;
d) 1 to 10 % by wt., based on the total weight of the coating composition, of a wax emulsion;
e) 0.1 to 10 % by wt., based on the total weight of the coating composition, of a surfactant; and
f) a photoinitiator.

The remaining amount of the coating composition to add up to 100 % by wt. is water.

It has now been found that the coating composition of the present application has superior properties when used in graphic arts, such as for use as a primer, as an overprint varnish or as a topcoat. It is surprising that the same coating composition may be used as primer, overprint varnish and/or topcoat. Such surprising universal use is based on the good adhesion properties of the coating in contact with inks, the substrate, other primers and/or topcoats.

Also, the coating compositions show a good runability on printing machines, such as good leveling properties and evaporation characteristics. The coating compositions may undergo a physical drying by water removal to form a non-tacky film prior to UV curing, thus providing a higher process security. After UV curing, the coatings show excellent wet abrasion resistance and resistance to water, specifically in comparison to standard water based coatings.

Furthermore, the coating compositions of the present application allow for the formation of coatings with very high resistance to scratching and abrasion, the coatings show very low delamination or exfoliation and demonstrate excellent intercoat adhesion. The coated substrates also have good embossing properties, good adhesion to glues, and a high heat resistance, such as up to 300 °C, even on printed substrates. In the further processing of coated substrates, the coatings have a very high heat resistance, protecting the ink and substrate up to 300 °C.

More specifically, the coatings of the present application may be used as primer for a subsequent coating with a conventional UV topcoat, or as a single layer topcoat, without any primer. However, the coating composition of the present application may also be used as a topcoat on top of a conventional primer, such as a water based primer. Especially when used as primer for the subsequent coating with a conventional UV topcoat, the coating compositions of the present application show very good adhesion properties. It is assumed that the UV curable components of the coating composition of the present application and the UV curable components in a UV curable topcoat may interact, and thus form a close bonding between the primer and the topcoat. The flexibility of the coating and the chemical interaction at the interface between the primer and a UV topcoat increases the adhesion between these two coatings. Also, the coating compositions of the present application may show improved adherence to inks, specifically to UV curable inks, when the coating composition is applied to uncured UV inks and the ink and the coating composition are UV cured simultaneously. These superior adhesion properties are manifested in a good scratch resistance, abrasion resistance, and shown by good results in the finger nail test and the Tesa tape test.

The coatings of the present application additionally have superior optical properties. When used as topcoat, the coatings show a very high transparency, especially in comparison with conventional water based topcoats, and also when used as primer in combination with conventional UV curable overprint varnishes. On the other hand, the coatings of the present application may also be used to achieve very good matting, allowing for the coating to be used as overprint varnish with very low gloss.

The coating composition as disclosed herein is an aqueous dispersion for use in the graphic arts. As such, the coating composition may be used in conventional printing and coating machines for water based coatings. The dispersions comprise as main components an aqueous radiation curable polyurethane dispersion and an aqueous dispersion of a non radiation curable (meth)acrylic resin.

The amounts indicated in the present application are usually given as percentages, based on the total weight of the final coating composition. The amounts given, e.g., for the polyurethane dispersion relate to the aqueous dispersion of a polyurethane, including the water as the continuous medium of the dispersion. It is understood that the coating composition adds up to 100 % by wt., with the remaining amount being water. The person skilled in the art will select the compulsory and optional components of the coating composition within the given ranges, and will optionally add water, if necessary, in such a way that the total amount of the coating composition will add up to 100 % by wt.

The radiation curable polyurethane used in the polyurethane dispersion may be any water dispersible, radiation curable polyurethane binder. Radiation curable polyurethanes for use in the present application are preferably (meth)acrylated polyurethanes, also termed as (poly)urethanes (meth)acrylates. The water dispersible, radiation curable polyurethane binder of the present application should be understood as a polyurethane dispersible in water. As such, the polyurethane is able to form a dispersion or emulsion in water. This is in contrast to a water dilutable compound, where the compound forms a solution with water. In the present application, the coating composition preferably does not contain any water dilutable urethane or polyurethane, i.e., less than 5 % by wt., preferably less than 3 % by wt., further preferably less than 1 % by wt., and most preferably less than 0.1 % by wt., based on the total weight of the coating composition, of a water dilutable urethane or polyurethane.

The terms "(meth)acrylate" or "(meth)acrylic" are meant to designate in the present application both acrylate and methacrylate as well as derivatives thereof or mixtures thereof. Thus, the term may refer to acrylate or methacrylate, or both.

Water-dispersible (poly)urethane (meth)acrylates are well known and have been widely described (see, e.g., WO 2009/115489). The state of the art generally includes anionically, cationically or nonionically stabilized (poly)urethane (meth)acrylate colloids in water. They are typically prepared by reacting one or more isocyanates (preferably a di-isocyanate or a tri-isocyanate) with one or more (meth)acrylated compounds containing at least one reactive group capable to react with isocyanate groups (such as a hydroxyl group), at least one hydrophilic compound containing at least one reactive group capable to react with isocyanate groups and which is capable to render the (poly)urethane dispersible in aqueous medium either directly or after the reaction with a neutralizing agent to provide a salt, and, optionally a polyol. By hydrophilic group is meant to designate a group that is either ionic, such as for example a carboxylate or sulfonate group, or that becomes ionic after reaction with a neutralizing agent forming a salt, such as a carboxylic acid, sulfonic acid, or an amino group. A suitable polymer composition is typically obtained from the capping or the chain extension of an isocyanateterminated ionomeric (poly)urethane oligomer with a mono or poly(meth)acrylated molecule containing at least one reactive group capable to react with isocyanate groups, such as a hydroxyl group. Chain extension, if desired, typically is provided by a polyamine compound. In other embodiments, the (poly)urethane oligomer further contains additional poly(meth)acrylated molecules that are not covalently linked to the polymer. A suitable example is provided by the reaction of a diisocyanate (like isophorone diisocyanate), a polyol (selected e.g. between polyesters, polyethers and polycarbonates), a functional polyol (like dimethylolpropionic acid), a poly(meth)acrylate compound (like pentaerythrytol triacrylate), and optionally, a polyamine (like hexamethylene diamine) and an amine (like triethylamine) followed by the subsequent dispersion of the compound in water. These dispersions can be further stabilized with an ionic and/or nonionic tensionactive compound (like a polyalkoxylated fatty alcohol). Suitable for use in the composition of the present invention are for example those that have been commercialized under the names of UCECOAT^{®} 7155, UCECOAT^{®} 7177, UCECOAT^{®} 7570, UCECOAT^{®} 7571, UCECOAT^{©} 7578, UCECOAT^{®} 7631, UCECOAT^{®} 7655, UCECOAT^{®} 7674, UCECOAT^{®} 7689, UCECOAT^{®} 7699, UCECOAT^{®} 7770, UCECOAT^{®} 7772, UCECOAT^{®} 7773, UCECOAT^{®} 7825 and UCECOAT^{®} 7849.

In a preferred embodiment, the polyurethane dispersion is present in the coating composition in an amount of 40 to 90 % by wt., preferably in an amount of 50 to 85 % by wt., more preferably in an amount of 60 to 80 % by wt., and most preferably in an amount of 65 to 75 % by wt., based on the total weight of the coating composition.

In a further preferred embodiment, the polyurethane dispersion is a combination of at least two different water-dispersible (poly)urethane (meth)acrylates. This allows for adjusting, e.g., the viscosity of the coating composition and the UV curing behavior. The water dispersible, radiation curable polyurethane dispersion preferably does not contain any urethane monomers, such as (meth)acrylated urethanes, , i.e., less than 5 % by wt., preferably less than 3 % by wt., further preferably less than 1 % by wt., and most preferably less than 0.1 % by wt., based on the total weight of the coating composition.

The term "radiation curable" is used in the present application in relation to a monomer, an oligomer, pre-polymer or polymer to refer to the ability of the monomer, oligomer, pre-polymer or polymer to further polymerize or cross-link using actinic radiation, such as UV light or an electron beam. The use of actinic radiation to start the polymerization reaction usually also requires the use of a photoinitiator. The polymerization reaction itself may be a radical or ionic polymerization. Examples of radiation curable molecules are compounds containing an ethylenic unsaturation, such as acrylic acid. In a preferred embodiment of the present invention, the radiation curable polyurethane is curable at a radiation in the UV range, such as 600 nm to 1 nm, preferably 400 nm to 10 nm.

The terms "non radiation curable" or "not radiation curable" refer to a monomer, an oligomer, pre-polymer or polymer that may not be polymerized by the use of actinic radiation, not even in the presence of a suitable photoinitiator.

In a further preferred embodiment, the polyurethane dispersion has a solid content of 20 to 50 % by wt., preferably 25 to 45 % by wt., more preferably 30 to 40 % by wt., based on the total weight of the polyurethane dispersion.

In general, the solid content of a dispersion or emulsion is the amount of non volatile constituents within the dispersion. Thus, the solid content may be determined by evaporating the volatile components of the dispersion, such as water or other solvents, and weighing the amount of remaining solids. The solid content of any dispersion or emulsion as used herein may be determined on the basis of DIN EN ISO 787-2 using a Sartorius Moisture Analyzer, by drying at 130 °C until a constant mass is achieved.

Apart from the polyurethane dispersion as a first binder, the coating compositions of the present application also comprise a dispersion of a non radiation curable (meth)acrylic resin as second binder in an amount of 2 to 30 % by wt., based on the total weight of the coating composition.

Said second binder is a binder usually used in water based coating compositions on the basis of a (meth)acrylic resin, and allows for the preparation of a dry, non-sticky or non-tacky film after removal of water. Thus, the coating compositions of the present invention are usually dry, non-tacky coatings after removal of water by air drying, i.e., by physical curing, but without curing by radiation, such as UV curing. With the use of a two-fold binder system, i.e., one binder curing on the basis of removal of solvent and the other binder curing by cross-linking initiated by actinic radiation, the coating compositions of the present application have an increased process stability. Even if one of the binder systems is not fully cured, the final coating is still cured / dried sufficiently by the "complimentary" binder on the basis of a (meth)acrylic resin.

Furthermore, the (meth)acrylic resin binder may be used for adjusting the viscosity of the coating composition. A person skilled in the art may adjust the viscosity of the coating composition according to the needs. As such, the viscosity for use in offset printing is usually higher that the viscosity for use in flexographic or gravure printing. The (meth)acrylic resin binder preferably shows good pigment wetting, transfer and rheology properties.

In a preferred embodiment, the non radiation curable (meth)acrylic resin is a homopolymer, block-copolymer or random-copolymer based on monomers selected from group consisting of styrene, acrylic acid, methacrylic acid, alkyl acrylate, alkyl methacrylate, aryl acrylate, aryl methacrylate, and mixtures thereof. Exemplary embodiments of alkyl (meth)acrylates are butyl (meth)acrylate, hexyl(meth)acrylate, 2-ethylhexyl acrylate, isobornyl(meth)acrylate, octyl/decyl (meth)acrylate. The homo-polymer, block-copolymer or random-copolymer may preferably be prepared from monomers selected from the group consisting of styrene, butyl acrylate, 2-ethylhexyl acrylate, acrylic acid and methacrylic acid. Specifically preferred are co-polymers of styrene and acrylic acid esters, and co-polymers of acrylic and (meth)acrylic acid esters, preferably not containing any other monomers. The polymers may be prepared by solid grade oligomer solution polymerization or by rheology controlled emulsion polymerization.

The term "alkyl" in the present application refers to (C₁-C₁₀)alkyl, preferably (C₁-C₆)alkyl, further preferably (C₁-C₄)alkyl. "(C₁-C_{X})alkyl" means a straight chain or branched non-cyclic hydrocarbon having from 1 to X carbon atoms. Representative straight chain (C₁-C₄)alkyls include methyl, ethyl, n-propyl, and n-butyl. Representative branched (C₁-C₄)alkyls include iso-propyl, sec-butyl, iso-butyl, and tert-butyl.

"Aryl" refers to any functional group or substituent derived from an aromatic ring, preferably a hydrocarbon aromatic ring, such as phenyl, naphthyl, thienyl, indolyl, with phenyl being preferred. The aryl ring may be unsubstituted or substituted.

The (meth)acrylic resin may be dispersible in water as it is, or following a partial neutralization of the carboxylic acid groups. In a preferred embodiment, the non radiation curable (meth)acrylic resin has an acid value of below 200 mg KOH/g (on solids), preferably below 100 mg KOH/g (on solids), and more preferably below 80 mg KOH/g (on solids).

The "acid value" (or "neutralization number" or "acid number" or "acidity") of the non radiation curable acrylic resin is the mass of potassium hydroxide (KOH) in milligrams that is required to neutralize one gram of non radiation curable acrylic resin. The acid number is a measure of the amount of carboxylic acid groups in the non radiation curable acrylic resin.

In general, the (meth)acrylic resin binder is an alkali soluble polymer emulsion. In a preferred embodiment, the dispersion of the non radiation curable (meth)acrylic resin has a pH in the range of 6 to 9, preferably in the range of 7 to 8, and more preferably in the range of 7.5 to 7.8. A pH in this range may be achieved by adding a suitable base, such as metal hydroxide. The use of amines as base is not preferred since the presence of amines may disturb the curing of the polyurethane binder. Thus, in a further preferred embodiment, the dispersion of the non radiation curable (meth)acrylic resin does not contain any amine compounds, such as alkyl amines.

According to another preferred embodiment, the non radiation curable (meth)acrylic resin has a weight average molecular weight of above 100 000, preferably above 150 000, more preferably above 200 000. The weight average molecular weight (M_{w}) may be determined by gel permeation chromatography (GPC) (ISO 16014-4 2003).

The aqueous dispersion of the non radiation curable (meth)acrylic resin is present in an amount of 2 to 30 % by wt. In a preferred embodiment, the aqueous dispersion of the non radiation curable (meth)acrylic resin is present in an amount of from 5 to 20 % by wt., preferably in an amount of from 6 to 15 % by wt., more preferably in an amount of from 7 to 12 % by wt., or in an amount from 10 to 30 % by wt., preferably in an amount of from 10 to 25 % by wt., more preferably in an amount of from 10 to 20 % by wt., based on the total weight of the coating composition.

Before the aqueous dispersion is added to the coating composition, the aqueous dispersion of the non radiation curable (meth)acrylic resin may have a solid content of 30 to 70 % by wt., more preferably 40 to 60 % by wt., based on the total weight of the aqueous dispersion of the non radiation curable (meth)acrylic resin.

Apart from the two binders, the coating composition of the present invention comprises a combination of two waxes, i.e., wax particles in an amount of from 0.1 to 5 % by wt., based on the total weight of the coating composition, and a wax emulsion in an amount of from 1 to 10 % by wt., based on the total weight of the coating composition. The combination of wax particles and a wax emulsion significantly increases the scratch resistance of the coating, and acts as an anti-polishing agent. The addition of the combination of two wax components may increase the adhesion of the coating in general, however, it may increase the scratch resistance without matting the coating. The coating thus shows good scratch resistance and high optical transparency.

In a preferred embodiment, the wax particles are present in an amount of from 0.1 to 3 % by wt., preferably from 0.1 to 2 % by wt., more preferably from 0.2 to 1 % by wt., based on the total amount of the coating composition.

The wax particles of the present invention may preferably have a particle size of below 30 µm, more preferably below 20 µm, further preferably below 15 µm, and/or above 0.5 µm, more preferably above 1 µm, further preferably above 2 µm.

The wax emulsion of the present application is a wax of very small particle size highly dispersed in water. Such dispersion of very small wax particles is termed herein as a wax emulsion. Preferably, the wax in the emulsion has a particle size of less than 2 µm, preferably less than 1 µm, further preferably less than 0.5 µm, and most preferably less than 200 nm.

The wax emulsions as used in the present application may be prepared by melting a wax and solubilising said melted wax. This is in contrast to a conventional wax dispersion where the wax particles are milled together with water. In such a wax emulsion, the particles may have very small particle sizes, such as below 200 nm, or even below 150 nm, or even below 100 nm. The wax emulsions as used herein are thus transparent emulsions of wax particles, preferably of wax nano particles. Accordingly, the use of a wax emulsion does not, or not substantially, add to the matting of the coatings prepared from the coating composition of the present application. However, the use of the wax emulsion adds to the scratch resistance of the coatings.

In another preferred embodiment, the wax emulsion is present in an amount of from 1.5 to 8 % by wt., preferably from 2 to 6 % by wt., based on the total amount of the coating composition. Preferably, the wax emulsion has a solid content of 20 to 50 % by wt., based on the total weight of the wax emulsion, more preferably of 25 to 40 % by wt., further preferably of 30 to 35 % by wt.

In general, the wax of the wax particles and/or the wax emulsion may comprise a natural, modified natural and/or synthetic wax, preferably a synthetic wax, more preferably a polyolefin wax, such as a polyethylene wax. Specifically preferred is a non-ionic emulsion of an oxidized polyolefin wax.

The coating composition of the present application additionally comprises a surfactant in the amount of from 0.1 to 10 % by wt., based on the total weight of the coating composition. Preferably, the surfactant is selected from emulsifying additives, wetting agents, leveling agents, dispersing agents, anti-settling agents, foam control agents, and flow additives. Further preferred is a combination of more than one surfactant.

In another preferred embodiment, the surfactant is used in an amount of from 0.5 to 8 % by wt., preferably 1 to 5 % by wt., based on the total weight of the coating composition.

The coating composition of the present application is a radiation curable coating composition. The curing of the composition by actinic radiation, such as UV light, is achieved by the addition of a photoinitiator to the coating composition. Any water soluble or water dispersible photoinitiators may be used in accordance with the present invention.

The photoinitiator is used in an amount sufficient to initiate the cross-linking reaction of the radiation curable components of the coating composition. Thus, the amount of photoinitiator may depend on the amount of radiation curable components. In a preferred embodiment, the photoinitiator is used in an amount of from 0.5 to 12 % by wt., preferably 1 to 8 % by wt., more preferably from 1.5 to 5 % by wt., based on the total weight of the coating composition.

Photoinitiators suitable for use in the present invention are preferably alpha-cleavage type photoinitiators and hydrogen abstraction-type photoinitiators, preferably a combination of both. The photoinitiators used in the present invention are preferably water soluble or water dispersible photoinitiators, but any photoinitiator known in the art may be used.

Suitable cleavage type photoinitiators include alpha, alpha-diethoxyacetophenone (DEAP), dimethoxyphenylacetophenone, 1-hydroxycyclo-hexylphenylketone (CPK), 2-hydroxy-2-methyl-1-phenylpropan-1-one, a 25:75 blend of bis-(2,6-dimethoxybenzoyl)-2,4,4- trimethylpentyl phosphine oxide and 2-hydroxy-2-methyl-1-phenylpropan-1- one, a 50:50 blend of 2-hydroxy-2-methyl-1-phenylpropan-1-one and 2,4,6-trimethylbenzoyl-diphenylphosphine oxide (TPO), 2,4,6-trimethyl benzoylphosphine oxide, 2,4,6-trimethylbenzoyl-diphenylphosphine oxide, and a mixture of 70% oligo 2-hydroxy-2-methyl-4-(1- methylvinyl)phenylpropan-1-one and 30% 2-hydroxy-2-methyl-1- phenylpropan-1-one. Suitable hydrogen abstraction-type photoinitiators include benzophenone (BP), substituted benzophenones, and other diaryl ketones such as xanthones, thioxanthones, Michler's ketone, benzil, quinones, and substituted derivatives of all of the above. Particularly preferred is a mixture of an alpha-cleavage type photoinitiator and a hydrogen abstraction- type photoinitiator, such as BP and CPK. Other mixtures of photoinitiators may also be used in the coating compositions of the present invention.

In addition to the above described components, the coating composition of the present application preferably further comprises additives selected from the group consisting of biocides, antioxidants, UV-stabilizers, pigments, colourants, dyestuffs, pearlescent agents, fillers, thickening agents, rheology adjusting additives, thixotropic agents, diluents, reactive diluents, defoamers, deaering agents, antistatic agents, film forming agents, flow leveling agents, anti-settling agents, slip additives, matting agents, optical brighteners, humectants, cross-linking agents, and adhesion promoters.

Multi-functional (meth)acrylate monomers may be used as cross-linking agent in accordance with the present invention. Multi-functional (meth)acrylate monomers are (meth)acrylic acid esters of di-, tri- and multi-hydroxyl alcohols, such as polyethylene glycol, poly-propylene glycol, aliphatic diols, neopentyl glycol, ethoxylated bisphenol A, trimethylolpropane, pentaerythritol, glycerol, di-trimethylolpropane, hydroxyl functional polyesters, dipentaerythritol and the ethoxylated, propoxylated and polycaprolactone analogs thereof. An exemplary cross-linking agent may be trimethylolpropane triacrylate, such as ethoxylated trimethylolpropane triacrylate.

In a specifically preferred embodiment, the coating composition of the present application comprises a matting agent, preferably a matting agent in particulate form made of silica, preferably modified silica, further preferably silicon dioxide, such as amorphous silicon dioxide. It is further preferred that the particles have a particle size in the range of from 1 µm to 20 µm, more preferably from 2 µm to 15 µm, and most preferably from 3 µm to 10 µm. It is still further preferred that the matting agent is used in an amount of from 0.1 to 10 % by wt., preferably from 1 to 8 % by wt., and more preferably from 3 to 6 % by wt., based on the total weight of the coating composition.

Other suitable matting agents include diatomaceous earth, heavy metal soaps, talcum, and chalk. Preferably the matting agent is selected from the group consisting of silica, diatomaceous earth, heavy metal soaps, talcum, chalk and mixtures thereof. Examples of matting agents include Acematt™ 3300 (a pyrogenic silica), Acematt™ TS-100, Acematt™ HK-400, Aerosil™ R-7200 and Aerosil™ R-9200 available from Evonik Degussa; Syloid™ ED5 available from W.R. Grace & Co; Gasil™ ED-5, Gasil™ 23D, Gasil™ 23F, Gasil™ 35M, Gasil™ HP-230, Gasil™ HP-270 and Gasil™ HP-880 from PQ Corporation and Deuteron MK (Methylenediamino-methylether-polycondensate) from Deuteron. The type of matting agent can also be chosen to suit the final application. For instance when Gasil™ 23D is used a matt film is obtained with high transparency, but when Gasil™ UV-70C or Acematt™ 3300 are used matt films are obtained with low transparency.

In another preferred embodiment, the coating composition of the present application has an overall solid content of from 20 to 60 % by wt., preferably from 30 to 55 % by wt., further preferably from 40 to 50 % by wt., based on the total weight of the coating composition. The solid content, and thus the viscosity of the coating composition, may be adjusted according to the needs for applying the coating composition. Depending on the coating method, the coating composition may be highly viscous, such as paste like, or it may have a very low viscosity, i.e., highly liquid. Exemplarily, the viscosity of the coating composition of the present application may be in the range of from 10 to 500 mPa.s, preferably from 80 to 170 mPa.s., especially for use in offset printing.

The coating compositions according to the invention are particularly suitable for use as an overprint varnish. In the present application, the term "overprint varnish" comprises the use as overprint varnish, primer, topcoats, deck coat, spot varnish or finish. Such coatings may be useful in the process of, or in connection with different printing methods, such as in flexography printing, gravure and rotogravure printing, offset printing, such as sheet offset printing, web offset printing, screen printing, ink jet printing, laser printing, pad printing, relief printing, letterpress printing, commercial printing and other known printing methods. However, the coating compositions of the present application may also be used on non-printed substrates, e.g., as inside coating, for food packages, or as general coating for substrates.

Substrate types for the application in the present invention include paper and cardboard, such as all coated and non-coated paper and cardboard types, metallised paper and cardboard, foil laminated paper and cardboard; plastic films, such as all types of PET, PVC, PE, PS, and PP films; foils and sheet metal substrates, and all materials used for the production of flexible packaging, all materials used for the generation of folding boxes, all substrates used for commercial printing, all materials used for the production of blister packaging, labels and peel-off labels, and all composite and layered materials.

When applied to a substrate, the coating compositions of the present invention may be directly applied to a printed substrate. The use of the coating composition is advantageously possible on substrates printed with all kinds of different printing techniques, such as sheet-fed offset printing, flexographic printing, gravure printing, ink jet printing, screen printing, and all kinds of different printing inks, such as conventional offset oil-based inks, hybrid inks, UV curing inks, water-based inks, inks based on renewable resources, low- or no migration inks, toner, and specialty inks for all the above listed printing procedures. Also possible is the coating on printing inks for book and binding printing, pad printing (indirect gravure), non-impact printing inks, and all possible future developed inks for the above named printing processes. Thus, the coating compositions may be applied in a similar manner as a conventional water based primer, however, without the need of an additional topcoat. When the coating composition of the present application is applied to a substrate, e.g., a printed substrate, the coating composition may be applied to the substrate in a wet-in-wet or wet-in-dry process. The water-based coating composition of the present application is compatible with both wet and dry paint or ink.

Prior to a radiation curing of the coating according the present application, the film-like coating is preferably dried. Drying of the film-like coating may be achieved by air drying, such as air drying with hot or cold air, or by infrared radiation. After such drying of the coating, the surface of the coating may be dry to the touch, i.e., the coating is a tack-free, non-sticky or non-tacky film.

The dried coating may then be additionally cured by radiation, preferably by UV radiation, and/or a further coating, such as a topcoat, may be applied. The further coating may be applied directly in an inline process, or offline in a separate coating machine. In a preferred embodiment, the removal of the water and the curing by irradiation is performed in separate steps.

When coatings are applied "offline", the printing and coating processes are separated in several automated passes: As the substrate is pulled through the printing press, first applied are the inks, such as offset inks, usually followed by a water-based coating, which may be referred to as a primer or overprint varnish. Said coating may then be quickly subjected to physical drying by hot or cold air-flow, or by IR. The printed and varnished substrate receives no additional treatment and is ejected out of the machine and automatically stacked on a palette. After a certain time, the substrate sheets in the stack can be further processed, either on the same machine or on another. An example of this would be "offline" two-sided coating of the printboard, where on the first side the board is printed and coated with a water based overprint varnish, the stack is allowed to dry or rest for 2 - 4 hrs, followed by reordering or flipping of the stack and then re-inserting the reverse side of each substrate board into the same machine for printing and varnishing. A second example would be "offline" coating, single sided, with a water based primer and conventional UV topcoat. In this case, the inks and water-based coating are applied, the substrate stack is allowed to dry for several hours, and the stack is then inserted into a UV coating machine (same side) where a conventional UV topcoat is partially or fully applied to the dried primer surface and then UV cured in the machine. A last example, particularly relevant to this patent, would be the application of the UV light to the printed and coated sample at a later time using a separate pass through the machine.

When coatings are applied "inline", the printing and coating processes are performed in a single automated pass: As the substrate is pulled through the printing press, first applied are the inks, such as offset inks, usually followed by a water-based coating, which may be referred to as a primer or overprint varnish. Said coating may then be quickly subjected to physical drying by hot or cold air-flow, or by IR. However, to differentiate from the offline procedure, the next process is applied in the same machine without removal of the substrate. In an exemplary embodiment of a coating of a conventional UV coating on top of a water based primer, after application of the primer and a quick drying step, the conventional UV coating is directly applied to the primer and subjected to UV light for curing. Thus the ejected samples in the stack have received a second and third processing step achieved in one pass through the machine. If there was no conventional UV coating applied and the sheets were still exposed to UV light, this would also be defined as an inline process since the UV was applied directly after the drying of the aqueous radiation curable primer without removal from the machine.

When a further topcoat, such as a conventional UV topcoat, is applied to the coating prepared from the coating composition of the present application, said further topcoat is preferably coated onto the coating of the present application prior to radiation curing of said coating. In a preferred embodiment, the primer coating according to the present application and an additional UV topcoat are cured by UV radiation simultaneously.

The present invention therefore also relates to the use of the compositions for making varnishes, such as primers, overprint varnishes and topcoats, and to a process for making varnishes wherein a composition as described here above is used.

In the present application, a "conventional UV topcoat" or a "conventional UV coating" or a "conventional UV varnish" is to be understood as a UV varnish as used in the prior art, especially for high gloss applications. Such conventional UV coatings are also termed as "100 % UV coating", referring to the UV coatings being formulated up to 100% solids so that they have no or very little volatile components, such as water or organic solvents, that contribute to pollution. Conventional UV coatings are UV radiation curable compositions.

When the coating composition is applied to a substrate, the substrate may be a printed substrate. The coating composition is preferably applied to result in a coating of a thickness in the range of from 1 to 10 µm, preferably 1 to 5 µm. Typical coating amounts for the application in an offset printing method may be in the range of from 2 to 10 g/m², preferably from 3 to 8 g/m² of dry coating, corresponding roughly to about 6 to about 30 g/m², preferably about 7 to about 20 g/m². However, coatings may be applied by other coating means, such as screen printing, and may then be applied in an amount of up to 100 g/m².

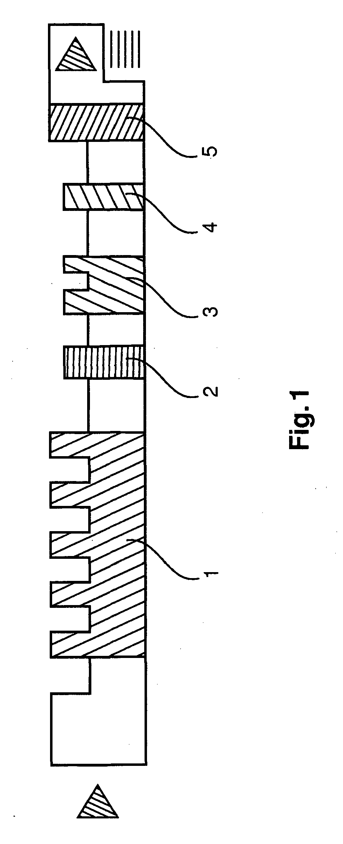

The application of the coating compositions of the present application may be illustrated in an exemplary way with reference to Fig. 1. Fig. 1 shows an exemplary process for the application of a coating composition according to the present invention. In a first step 1, a substrate, such as a paper, is printed, e.g., in a flexographic or offset printing process using conventional inks. Then, the coating composition of the present invention is applied in a second step 2, and dried, such as by a stream of hot air, in a further step 3. Finally, a conventional UV topcoat is applied in step 4 and the coatings are cured by UV radiation in step 5

Where the term "comprising" is used in the present description and claims, it does not exclude other elements. For the purposes of the present invention, the term "consisting of" is considered to be a preferred embodiment of the term "comprising of'. If hereinafter a group is defined to comprise at least a certain number of embodiments, this is also to be understood to disclose a group, which preferably consists only of these embodiments.

In the following, the preparation of an exemplary embodiment is described. This embodiment is understood to exemplify the present invention, without being restricted to said embodiment.

### Examples

### Example 1

A coating composition in accordance with the present invention may be prepared by mixing the components listed in the table below:

| Compound | Amount in % by wt. |
|---|---|
| a combination of radiation curable polyurethane dispersions (such as UCECOAT^{®} 7699 and UCECOAT^{®} 7631) | 70 |
| an acrylic emulsion (molecular weight above 200,000, pH 7.7, acid value (on solids) 70, such as Joncryl^{®} 538) | 2 |
| a foam control agent (Drewplus^{®} TS-4387) | 0.2 |
| a rheology adjusting additive (modified urea, BYK^{®}-410) | 0.5 |
| a micronized polyolefin wax (Ceridust 9615 A) | 0.5 |
| a multifunctional silica (Syloid^{®} 244) | 3 |
| a flatting agent (flatting silica, Lo-Vel^{®} 27) | 2.5 |
| a dispersing agent (Tego^{®} Dispers 715 W) | 0.1 |
| a wetting agent (polyether modified polydimethylsiloxane, Byk^{®} 3455) | 0.5 |
| a coalescence agent (dipropylene glycol monobutylether, Dowanol^{®} DPnB) | 1 |
| a wax emulsion (Aquacer® 7999) | 4 |
| a slip additive (high molecular silicone additive, WorléeAdd^{®} 352) | 0.1 |
| a dispersion of an acrylic resin (ammonia free dispersion of styrene and acrylic acid ester, Induprint SE^{®} 197) | 4 |
| a dispersion of an acrylic resin (dispersion of co-polymerized acrylic acid ester and methacrylic acid ester, Indunal) | 2.1 |
| a wetting agent (Hydropalat^{®} 875) | 2.25 |
| a non-ionic surfactant (Surfynol^{®} 465) | 0.75 |
| a silicone wetting agent (Byk^{®} 345) | 0.5 |
| a photoinitiator (mixture of 1-hydroxy cyclohexyl phenylketone (CPK) and benzophenone (BP), Cytec^{®} Additol BCPK) | 3 |
| a cross-linking agent (ethoxylated trimethylolpropane triacrylate) | 3 |

The resulting coating composition had a viscosity of 155 mPa.s or 40 s in a DIN 4 cup.

### Example 2

The aqueous radiation curable coating composition as prepared in Example 1 above was applied as an overprint varnish on a MAN-ROLAND R709 LTTLV print machine. The substrate was a 300 g/m² Trulor 1 Matt BPOP printboard, and the inks applied were taken from the UV curable Supra Folie series from Jaenecke & Schneemann, Hannover, Germany.

The coating composition of Example 1 was applied utilizing a 6.5 g/m² hexagonal anilox roller and Folex Folacoat printplate. Intermediate drying, first of the UV inks was 1 x 160 W, followed by intermediate drying of the coating composition, 1 x 65 °C hot air, and the end curing by UV was 2 x 160 W. The speed of the machine was set to 7,500 sheets per hour and the overprint varnish was cured inline.

### Example 3

The process of Example 2 above was repeated, except that prior to UV end curing, a conventional UV varnish was also applied inline at 18 g/m² with a hexagonal anilox roller, Gold A printplate, and both coatings were UV cured simultaneously using 2 x 160 W.

### Example 4

The aqueous radiation curable coating composition as prepared in Example 1 above was applied as an overprint varnish on a MAN-ROLAND R708 Ultima print machine. The substrate was a 300 g/m² BVS gloss coated paper, and the inks applied were conventional oxidative drying oil based offset inks from Jaenecke & Schneemann, Hannover, Germany.

The coating composition of Example 1 was applied utilizing a 6.5 hexagonal anilox roller and Folex Folacoat printplate, followed by intermediate drying of the coating composition, 1 x 65° C hot air, and the end curing by UV was 2 x 160 W. The speed of the machine was set to 7,500 sheets per hour and the coating composition was cured inline.

### Example 5

The process of Example 4 above was repeated, except that prior to UV end curing, a conventional UV varnish was also applied inline at 18 g/m² with a hexagonal anilox roller, Gold A printplate, and both coatings were UV end cured simultaneously using 2 x 160 W.

### Comparative Example 6

A pulldown of two coatings, in the left lane a standard water based matt coating, in the right lane the aqueous radiation curable matt coating of Example 1 above, on an aluminum laminated printboard. The dry film thickness of the two coatings, side-by-side on the aluminum substrate was approximately 3-4 g/m². The coatings were allowed to air dry for 10-15 seconds. Then, a conventional UV high gloss coating was applied, with an approximate thickness of 6-8 g/m² overtop of the two matt coatings. After UV curing (twice with 100 W / 40 m/min) the opacity and appearance of two lanes were compared.

Optical inspection of the left-hand lane (standard matt coating) appeared to have a haziness or greyish opaqueness underneath the conventional UV gloss coating, whereas the right-hand lane (aqueous radiation curable matt coating of Example 1) appeared to be extremely transparent, almost as if both coatings (primer and conventional UV topcoat) were not there and one was looking at the aluminium substrate itself. The coating of Example 1 used as primer thus shows very good transparency and the interface of the two coatings was not visible; both overlapping coatings appeared as a single coating.

### Comparative Example 7

For the testing of the adhesion of the applied coatings, a tape test was used. The tape test was applied as follows: A strip of Tesa band tape (universal, 15 mm) was pressed onto the UV overprint varnish topcoat, where the primer and ink is underneath, so firmly that no air bubbles could be trapped. The tape was then stripped off at a uniform rate and examined.

The results were classified as either poor intercoat adhesion, or excellent intercoat adhesion, using the following definition:

Poor intercoat adhesion is observed when the tape band shows that the conventional UV topcoat is glued to the tape band, without any primer or ink or substrate, and the band is no longer sticky. As well, the substrate shows where the tape removed the UV coating but the primer, ink and substrate remain. The weak link in adhesion is between the primer and the conventional UV varnish.

Excellent intercoat adhesion is observed when the tape band is stripped off and no over print varnish or substance was removed from the surface, or when the tape removed all coats and ink (so the tape appears coloured from the ink), or when the substrate material itself plus ink and all coatings appear on the tape band and one observes a fibre rip on the substrate where the tape was removed.

Onto a cardboard substrate was rolled (lab scale rubber ink roller) a UV curable ink (UV Supra, Jaenecke & Schneemann). The UV ink was cured with one pass at 160 W / 40 meters/minute. A Pull-down of the two coatings to be tested (conventional classical matt over print varnish vs. aqueous radiation curable coating of Example 1) was applied to the substrate and overtop of the ink by a lab scale Flexo roller (Erichsen GmbH, FR 165/28), leaving two side-by-side lanes, one of each coating. The coatings were left to air dry for 10 seconds and then a conventional UV topcoat was applied overtop of the two water based primers. The substrate plus coatings were then UV cured with two passes at 160 W / 40 meters/minute.

Tape test: Using the above defined procedure, a tape test was performed where the tape band was applied onto the conventional UV varnish extending over both primer lanes (with ink underneath) simultaneously. When the tape was stripped off, poor adhesion was observed from the classical matt over print varnish and the UV coating remained stuck to the tape without primer or ink. On the other hand, the aqueous radiation curable coating of Example 1 showed excellent intercoat adhesion and nothing was observed stuck to the tape.

### Comparative Example 8

For an alternative testing of the adhesion of the applied coatings, a fingernail scratch test was used.

The fingernail scratch test was applied as follows: Using a finger with an intact, rounded fingernail, the back of the nail is rubbed with light but steady pressure overtop of the surface of the OVP in several passes.

The results were classified as either poor intercoat adhesion, or excellent intercoat adhesion, using the following definition:

Poor intercoat adhesion: the conventional UV topcoat scratches off in mini-flakes exposing the surface of the primer underneath.

Excellent intercoat adhesion: the conventional UV topcoat cannot be scratched off, and one observes almost no sign of surface marring from the fingernail.

Onto a cardboard substrate was rolled (lab scale rubber ink roller) a UV curable ink (UV Supra, Jaenecke & Schneemann). The UV ink was cured with one pass at 160 W / 40 meters/minute. A Pull-down of the two coatings to be tested (conventional classical matt over print varnish vs. aqueous radiation curable coating of Example 1) was applied to the substrate and overtop of the ink by a lab scale Flexo roller (Erichsen GmbH, FR 165/28), leaving two side-by-side lanes, one of each coating. The coatings were left to air dry for 10 seconds and then a conventional UV topcoat was applied overtop of the two water based primers. The substrate plus coatings was then UV cured with two passes at 160 W / 40 meters/minute.

Fingernail scratch test: when the fingernail was scratched over the surface of the conventional UV topcoat, covering both primer lanes, the classical matt coating was easily scratched away (poor adhesion) whereas the aqueous radiation curable coating of Example 1 showed excellent intercoat adhesion and could not be scratched off, even with harder pressure.

### Comparative Example 9

A comparative test similar to Comparative Examples 7 and 8 was performed using a conventional printing machine. Printing tests were performed on a MAN-ROLAND R709 LTTLV print machine, using a conventional classical matt coating system versus an aqueous radiation curable coating according to Example 1.

The coatings obtained in Example 2 (printed substrate A) were compared to coatings obtained in a process similar to Example 2, but replacing the primer in accordance with Example 1 by a conventional matt primer system (printed substrate B).

On the printed substrates A and B, the tesa tape test and the fingernail test, as described in Comparative Examples 7 and 8 above, were performed. The obtained results mirror very closely those obtained in the laboratory. The conventional matt primer system (printed substrate B) had a negative or poor tape test, while the aqueous radiation curable coating of Example 1 (printed substrate A) demonstrated excellent intercoat adhesion. The results were identical 24 hrs after printing as well.

With the fingernail test, printed substrate B showed a positive result with light scratching but upon increase of pressure, the coating could be partially scratched off, whereas the coating on printed substrate A could not be removed, even under harder scratching pressure.

The coatings prepared in accordance with the present invention thus clearly show improved intercoat adhesion, compared to conventional coatings.

## Claims

1. Coating composition for use in graphic arts comprising:
a) 30 to 95 % by wt., based on the total weight of the coating composition, of an aqueous radiation curable polyurethane dispersion;
b) 2 to 30 % by wt., based on the total weight of the coating composition, of an aqueous dispersion of a non radiation curable (meth)acrylic resin;
c) 0.1 to 5 % by wt., based on the total weight of the coating composition, of wax particles;
d) 1 to 10 % by wt., based on the total weight of the coating composition, of a wax emulsion;
e) 0.1 to 10 % by wt., based on the total weight of the coating composition, of a surfactant; and
f) a photoinitiator.

2. Coating composition according to claim 1, wherein the polyurethane dispersion is present in an amount of 40 to 90 % by wt., preferably in an amount of 60 to 80 % by wt., based on the total weight of the coating composition.

3. Coating composition according to any one of the preceding claims, wherein the polyurethane dispersion has a solid content of 20 to 50 % by wt., preferably 30 to 40 % by wt., based on the total weight of the polyurethane dispersion.

4. Coating composition according to any one of the preceding claims, wherein the aqueous dispersion of the non radiation curable (meth)acrylic resin is present in an amount of 5 to 20 % by wt., preferably in an amount of from 7 to 12 % by wt., or in an amount of from 10 to 30 % by wt., preferably in an amount of from 10 to 20 % by wt, based on the total weight of the coating composition.

5. Coating composition according to any one of the preceding claims, wherein the non radiation curable (meth)acrylic resin is a homo-polymer, block-copolymer or random-copolymer based on monomers selected from group consisting of styrene, acrylic acid, methacrylic acid, alkyl acrylate, alkyl methacrylate, aryl acrylate, aryl methacrylate, and mixtures thereof.

6. Coating composition according to any one of the preceding claims, wherein the non radiation curable (meth)acrylic resin has an acid value of below 200 mg KOH/g (on solids), preferably below 80 mg KOH/g (on solids).

7. Coating composition according to any one of the preceding claims, wherein the non radiation curable (meth)acrylic resin has a weight average molecular weight of above 100 000, preferably above 200 000.

8. Coating composition according to any one of the preceding claims, wherein the dispersion of the non radiation curable (meth)acrylic resin does not contain any amine compounds, such as alkyl amines.

9. Coating composition according to any one of the preceding claims, wherein the wax particles are present in an amount of from 0.1 to 3 % by wt., preferably from 0.2 to 1 % by wt., based on the total amount of the coating composition.

10. Coating composition according to any one of the preceding claims, wherein the wax emulsion is present in an amount of from 1.5 to 8 % by wt., preferably from 2 to 6 % by wt., based on the total amount of the coating composition.

11. Coating composition according to any one of the preceding claims, wherein the surfactant is selected from an emulsifying additives, wetting agents, leveling agents, dispersing agents, anti-settling agents, foam control agents, and flow additives.

12. Coating composition according to any one of the preceding claims, wherein the composition further comprises additives selected from the group consisting of biocides, antioxidants, UV-stabilizers, pigments, colourants, dyestuffs, pearlescent agents, fillers, thickening agents, rheology adjusting additives, thixotropic agents, diluents, reactive diluents, defoamers, deaering agents, antistatic agents, film forming agents, flow leveling agents, anti-settling agents, matting agents, optical brighteners, humectants, crosslinking agents, waxes, and adhesion promoters.

13. Coating composition according to claim 12, wherein the matting agent is in particulate form made from silica, preferably having a particle size in the range of from 1 µm to 20 µm, more preferably from 3 µm to 10 µm.

14. Use of a coating composition according to any one of the preceding claims as an overprint varnish, as a primer or as a topcoat.

15. Coated substrate, obtained by coating a substrate with a coating composition according to any one of the claims 1 to 13.

## Patentansprüche

1. Beschichtungszusammensetzung zur Verwendung in der graphischen Industrie umfassend:
a) 30 bis 95 Gew.-%, basierend auf dem Gesamtgewicht der Beschichtungszusammensetzung, einer wässrigen, strahlungshärtbaren Polyurethandispersion;
b) 2 bis 30 Gew.-%, basierend auf dem Gesamtgewicht der Beschichtungszusammensetzung, einer wässrigen Dispersion eines nicht strahlungshärtbaren (Meth)Acrylharzes;
c) 0,1 bis 5 Gew.-%, basierend auf dem Gesamtgewicht der Beschichtungszusammensetzung, an Wachspartikeln;
d) 1 bis 10 Gew.-%, basierend auf dem Gesamtgewicht der Beschichtungszusammensetzung, einer Wachsemulsion;
e) 0,1 bis 10 Gew.-%, basierend auf dem Gesamtgewicht der Beschichtungszusammensetzung, eines oberflächenaktiven Stoffes; und
f) einen Photoinitiator.

2. Beschichtungszusammensetzung gemäß Anspruch 1, wobei die Polyurethandispersion in einer Menge von 40 bis 90 Gew.-%, bevorzugt in einer Menge von 60 bis 80 Gew.-%, basierend auf dem Gesamtgewicht der Beschichtungszusammensetzung, vorliegt.

3. Beschichtungszusammensetzung gemäß einem der vorhergehenden Ansprüche, wobei die Polyurethandispersion einen Feststoffgehalt von 20 bis 50 Gew.-%, bevorzugt 30 bis 40 Gew.-%, basierend auf dem Gesamtgewicht der Polyurethandispersion, besitzt.

4. Beschichtungszusammensetzung gemäß einem der vorhergehenden Ansprüche, wobei die wässrige Dispersion des nicht strahlungshärtbaren (Meth)Acrylharzes in einer Menge von 5 bis 20 Gew.-%, bevorzugt in einer Menge von 7 bis 12 Gew.-%, oder in einer Menge von 10 bis 30 Gew.-%, bevorzugt in einer Menge von 10 bis 20 Gew.-%, basierend auf dem Gesamtgewicht der Beschichtungszusammensetzung, vorliegt.

5. Beschichtungszusammensetzung gemäß einem der vorhergehenden Ansprüche, wobei das nicht strahlenhärtbare (Meth)Acrylharz ein Homopolymer, ein Block-Copolymer oder ein Random-Copolymer ist, basierend auf Monomeren, ausgewählt aus der Gruppe bestehend aus Styrol, Acrylsäure, Methacrylsäure, Alkylacrylat, Alkylmethacrylat, Arylacrylat, Arylmethacrylat und deren Mischungen.

6. Beschichtungszusammensetzung gemäß einem der vorhergehenden Ansprüche, wobei das nicht strahlenhärtbare (Meth)Acrylharz eine Säurezahl von unterhalb von 200 mg KOH/g (Feststoff), bevorzugt weniger als 80 mg KOH/g (Feststoff) besitzt.

7. Beschichtungszusammensetzung gemäß einem der vorhergehenden Ansprüche, wobei das nicht strahlenhärtbare (Meth)Acrylharz ein Gewichtsmittelmolekulargewicht von oberhalb 100 000, bevorzugt von oberhalb 200 000 besitzt.

8. Beschichtungszusammensetzung gemäß einem der vorhergehenden Ansprüche, wobei die Dispersion des nicht strahlenhärtbaren (Meth)Acrylharzes keine Aminverbindungen, wie z.B. Alkylamine, enthält.

9. Beschichtungszusammensetzung gemäß einem der vorhergehenden Ansprüche, wobei die Wachspartikel in einer Menge von 0,1 bis 3 Gew.-%, bevorzugt von 0,2 bis 1 Gew.-%, basierend auf dem Gesamtgewicht der Beschichtungszusammensetzung, vorliegen.

10. Beschichtungszusammensetzung gemäß einem der vorhergehenden Ansprüche, wobei die Wachsemulsion in einer Menge von 1,5 bis 8 Gew.-%, bevorzugt von 2 bis 6 Gew.-%, basierend auf dem Gesamtgewicht der Beschichtungszusammensetzung, vorliegt.

11. Beschichtungszusammensetzung gemäß einem der vorhergehenden Ansprüche, wobei der oberflächenaktive Stoff ausgewählt ist aus emulgierenden Zusatzstoffen, Benetzungsmitteln, Verlaufsmitteln, Dispergiermitteln, Absetzverhütungsmitteln, Schaumkontrollmitteln und Flussadditiven.

12. Beschichtungszusammensetzung gemäß einem der vorhergehenden Ansprüche, wobei die Zusammensetzung des weiteren Zusatzstoffe enthält, ausgewählt aus der Gruppe bestehend aus Bioziden, Antioxidantien, UV-Stabilisatoren, Pigmenten, Farbstoffen, Färbemitteln, Perlglanzmitteln, Füllstoffen, Verdickungsmitteln, rheologieveränderten Zusatzstoffen, thixotropen Mitteln, Verdünnungsmitteln, reaktiven Verdünnungsmitteln, Entschäumern, Entlüftungsmitteln, antistatischen Mitteln, filmbildenden Mitteln, Flussverlaufsmitteln, Absetzverhütungsmitteln, Mattierungsmitteln, optischen Aufhellern, Befeuchtungsmitteln, quervernetzenden Mitteln, Wachsen und Adhäsionsverbesserern.

13. Beschichtungszusammensetzung gemäß Anspruch 12, wobei das Mattierungsmittel in partikelförmiger Form vorliegt, hergestellt aus Silica, bevorzugt mit einer Partikelgröße im Bereich von 1 µm bis 20 µm, weiter bevorzugt von 3 µm bis 10 µm.

14. Verwendung einer Beschichtungszusammensetzung gemäß einem der vorhergehenden Ansprüche als Lack, als Grundierung (primer) oder als Überdrucklack.

15. Beschichtetes Substrat, erhalten durch Beschichten eines Substrates mit einer Beschichtungszusammensetzung gemäß einem der Ansprüche 1 bis 13.

## Revendications

1. Composition de revêtement destinée à être utilisée dans les arts graphiques comprenant :
a) de 30 à 95 % en poids, sur la base du poids total de la composition de revêtement, d'une dispersion aqueuse de polyuréthane durcissable par rayonnement ;
b) de 2 à 30 % en poids, sur la base du poids total de la composition de revêtement, d'une dispersion aqueuse d'une résine (méth)acrylique non durcissable par rayonnement ;
c) de 0,1 à 5 % en poids, sur la base du poids total de la composition de revêtement, de particules de cire ;
d) de 1 à 10 % en poids, sur la base du poids total de la composition de revêtement, d'une émulsion de cire ;
e) de 0,1 à 10 % en poids, sur a base du poids total de la composition de revêtement, d'un tensioactif ; et
f) un photoinitiateur.

2. Composition de revêtement selon la revendication 1, dans laquelle la dispersion de polyuréthane est présente en une quantité de 40 à 90 % en poids, de préférence en une quantité de 60 à 80 % en poids, sur la base du poids total de la composition de revêtement.

3. Composition de revêtement selon l'une quelconque des revendications précédentes, dans laquelle la dispersion de polyuréthane a une teneur en matières solides de 20 à 50 % en poids, de préférence de 30 à 40 % en poids, sur la base du poids total de la dispersion de polyuréthane.

4. Composition de revêtement selon l'une quelconque des revendications précédentes, dans laquelle la dispersion aqueuse de la résine (méth)acrylique non durcissable par rayonnement est présente en une quantité de 5 à 20 % en poids, de préférence en une quantité de 7 à 12 % en poids ou en une quantité de 10 à 30 % en poids, de préférence en une quantité de 10 à 20 % en poids, sur la base du poids total de la composition de revêtement.

5. Composition de revêtement selon l'une quelconque des revendications précédentes, dans laquelle la résine (méth)acrylique non durcissable par rayonnement est un homopolymère, un copolymère séquencé ou un copolymère aléatoire à base de monomères sélectionnés dans le groupe constitué par le styrène, l'acide acrylique, l'acide méthacrylique, l'acrylate d'alkyle, le méthacrylate d'alkyle, l'acrylate d'aryle, le méthacrylate d'aryle et les mélanges de ceux-ci.

6. Composition de revêtement selon l'une quelconque des revendications précédentes, dans laquelle la résine (méth)acrylique non durcissable par rayonnement a un indice d'acidité inférieur à 200 mg KOH/g (sur les matières solides), de préférence inférieur à 80 mg KOH/g (sur les matières solides).

7. Composition de revêtement selon l'une quelconque des revendications précédentes, dans laquelle la résine (méth)acrylique non durcissable par rayonnement a un poids moléculaire moyen en poids supérieur à 100 000, de préférence supérieur à 200 000.

8. Composition de revêtement selon l'une quelconque des revendications précédentes, dans laquelle la dispersion de la résine (méth)acrylique non durcissable par rayonnement ne contient pas de composés d'amine, tel que les alkylamines.

9. Composition de revêtement selon l'une quelconque des revendications précédentes, dans laquelle les particules de cire sont présentes en une quantité de 0,1 à 3 % en poids, de préférence de 0,2 à 1 % en poids, sur la base du poids total de la composition de revêtement.

10. Composition de revêtement selon l'une quelconque des revendications précédentes, dans laquelle l'émulsion de cire est présente en une quantité de 1,5 à 8 % en poids, de préférence de 2 à 6 % en poids, sur la base du poids total de la composition de revêtement.

11. Composition de revêtement selon l'une quelconque des revendications précédentes, dans laquelle le tensioactif est sélectionné parmi les additifs émulsionnants, les agents de mouillage, les agents d'harmonisation, les agents de dispersion, les agents de suspension, les agents de contrôle de la mousse et les additifs d'écoulement.

12. Composition de revêtement selon l'une quelconque des revendications précédentes, dans laquelle la composition comprend en outre des additifs sélectionnés dans le groupe constitué par les biocides, les antioxydants, les stabilisateurs d'UV, les pigments, les matières colorantes, les teintures, les agents nacrés, les matières de remplissage, les agents épaississants, les additifs d'ajustement de la rhéologie, les agents thixotropes, les diluants, les diluants réactifs, les agents anti-mousse, les agents de débullage, les agents antistatiques, les agents filmogènes, les agents d'harmonisation d'écoulement, les agents de suspension, les agents de matage, les azurants optiques, les humidifiants, les agents de réticulation, les cires et les promoteurs d'adhérence.

13. Composition de revêtement selon la revendication 12, dans laquelle l'agent de matage se présente sous la forme de particules faites de silice, ayant de préférence une taille de particules dans la plage de 1 µm à 20 µm, plus préférablement de 3 µm à 10 µm.

14. Utilisation d'une composition de revêtement selon l'une quelconque des revendications précédentes en tant que vernis de surimpression, en tant que couche d'accroche ou en tant que couche de finition.

15. Substrat revêtu, obtenu par revêtement d'un substrat avec une composition de revêtement selon l'une quelconque des revendications 1 à 13.
